# EUROPÄISCHE PATENTSCHRIFT

(11) **EP 0 730 934 B1**
(45) Veröffentlichungstag und Bekanntmachung des Hinweises auf die Patenterteilung: **19.05.1999**
(21) Anmeldenummer: 96103508.6
(22) Anmeldetag: 07.03.1996
(51) Int. Cl.: B26D 7/18, B26D 1/20

(54) **Beschneidemaschine mit Abfallstreifenentsorgung**
Machine for trimming with scrap strips disposal system
Rogneuse avec dispositif d'évacuation des chutes

(30) Priorität: 07.03.1995 DE 19507720
(43) Veröffentlichungstag der Anmeldung: 11.09.1996
(73) Patentinhaber: ROTH & WEBER OHG, 57520 Niederdreisbach (DE)
(72) Erfinder: Jung, Dieter, 57567 Daaden (DE)
(74) Vertreter: Grosse, Dietrich, Dipl.-Ing.

(56) Entgegenhaltungen:
- DE-C- 876 386
- US-A- 3 808 926
- US-A- 3 937 377

## Beschreibung

Die Erfindung betrifft ein Verfahren sowie eine Vorrichtung zum Erfassen von beim Betreiben von ein verfahrbares Kreismesser aufweisenden Beschneidemaschinen für Papier, Pappe, Folien oder dergleichen anfallenden Abfallstreifen für deren Entsorgung.

Beschneidemaschinen für Papier, Pappe, Folien oder dergleichen sind seit langem bekannt, wie z.B. aus DE-C-876 386. Sie bestehen z. B. aus einem feststehenden Längsmesser, an dem ein Kreismesser zum Schnitt entlang geführt wird. Der Messerträger des Kreismessers ist auf einer Linearführung geführt und kann manuell oder motorisch angetrieben werden. Die beim Beschneiden von z. B. Zeichnungen anfallenden Abfallstreifen fallen regelmäßig in einen unterhalb des Messers angeordneten Auffangbehälter.

Dabei entstehen je nach Schnitt in Ihrer Länge und Breite unterschiedlich bemessene Abfallstreifen, die in Abhängigkeit von den geschnittenen Materialien, in Abhängigkeit von den entsprechenden Abmessungen und zum Teil in Abhängigkeit von der Schnittrichtung unterschiedliches Verhalten aufweisen. So können glatte Abfallstreifen aber auch Abfallstreifen in Form einer Schillerlocke oder in Form von Rollen entstehen. All diese unterschiedlich geformten Abfallstreifen beanspruchen in dem Auffangbehälter erheblichen Platz, so daß der Behälter sehr oft durch einen leeren Behälter ausgetauscht werden muß. Hinzu kommt, daß beim Schneiden unterschiedlicher Materialien kein sortenreines Sammeln der Abfallstreifen und ein anschließendes leichtes Recycling derselben möglich ist.

Hier wurde bereits vorgeschlagen, den Sammelbehälter beim Beschneiden unterschiedlicher Materialien jeweils gegen einen weiteren Behälter auszutauschen, um ein sortenreines Sammeln zu gewährleisten. Um das große Volumen der gesammelten Abfallstreifen zu verkleinern wurde schon vorgeschlagen, die Abfallstreifen einem Reißwolf zuzuführen. Dabei ergaben sich die Schwierigkeiten, daß die unterschiedlich geformten Abfallstreifen nur unter erheblichem Aufwand sicher, ohne Staus hervorzurufen, in den Reißwolf eingeführt werden konnten. Um hier ein sortenreines Sammeln der vom Reißwolf erzeugten Schnitzel zu gewährleisten, mußte der Auffangsack des Reißwolfs ständig gewechselt werden.

Der Erfindung liegt die Aufgabe zugrunde, eine Beschneidemaschine für Papier, Pappe, Folien oder dergleichen so weiterzubilden, daß ein platzsparendes und vorzugsweise sortenreines Sammeln der Abfallstreifen problemlos möglich ist.

Dazu wird verfahrensmäßig vorgeschlagen, daß die Abfallstreifen im Bereiche der Trennstelle erfaßt und in einen mit dem Kreismesser zusammen verfahrbaren Zerkleinerer überführt werden und die entstehenden Schnitzel in einem entleerbaren Behältnis aufgefangen werden.

Durch das Erfassen der Abfallstreifen direkt im Bereiche der Trennstelle und das Führen der Abfallstreifen zum Zerkleinerer wird ein Kräuseln, Wellen oder Verdrehen der Abfallstreifen verhindern. Ein Einführen der Abfallstreifen in den Zerkleinerer verläuft daher problemlos. Die im Zerkleinerer entstehenden Schnitzel werden in einem diesem zugeordneten Behältnis aufgefangen. Durch Öffnen einer am unteren Ende des Behältnis angeordneten Klappe fallen die Schnitzel aus dem Behältnis vorzugsweise in einen Entsorgungsbehälter, der unter der Beschneidemaschine angeordnet ist. Hier können für unterschiedliche Materialien mehrere Entsorgungsbehälter vorgesehen werden. Das Behältnis des Zerkleinerers kann vor jedem neuen Schnitt entleert werden aber auch erst, wenn anderes Material geschnitten werden soll.

Wichtig ist, daß die Abfallstreifen in beiden Schneidrichtungen des Kreismessers erfaßbar sind, so daß die Abfallstreifen in jeder Schneidrichtung entsprechend zerkleinert werden können.

Vorrichtungsmäßig wird die Aufgabe durch die Merkmale des Anspruchs 3 gelöst. Weitere sinnvolle Ausgestaltungen ergeben sich aus den Ansprüchen 4 bis 14.

Der Zerkleinerer kann z. B. einen Motor aufweisen, der die Messer, vorzugsweise Walzenmesser, des Zerkleinerers drehantreibt. Die Walzenmesser werden vorzugsweise mit einer festen Drehzahl, unabhängig von der Vorschubsgeschwindigkeit und Vorschubrichtung des Kreismessers in einer Drehrichtung angetrieben. Den Walzenmessern ist ein Gegenmesser zugeordnet.

Es besteht jedoch die Möglichkeit, die Walzenmesser manuell anzutreiben. Dazu wird die Verschiebebewegung des Messerträgers und des Zerkleinerers ausgenutzt und über ein Getriebe auf die Walzenmesser gegeben. In diesem Falle würden die Walzenmesser eine Drehrichtungsumkehr erfahren, wenn z. B. von einer nach rechts gerichteten Schnittbewegung des Kreismessers auf eine nach links gerichtete Schnittbewegung übergegangen wird. In diesem Falle müßten den Walzenmessern für jede der beiden Schnittrichtungen ein feststehendes Gegenmesser zugeordnet werden.

Wird das Kreismesser und dessen Messerträger motorisch angetrieben, so kann dieser Motor gleichzeitig zum Antrieb der Walzenmesser herangezogen werden.

Der Zerkleinerer stützt sich, wie auch der Messerträger, auf einer Linearführung ab. Ist der Zerkleinerer mit dem Messerträger gekoppelt ergibt sich durch die beiden Linearführungen eine definierte Führung des Zerkleinerers. Eine Kupplung zwischen dem Messerträger und dem Zerkleinerer kann betätigt werden, um den Zerkleinerer vom Messerträger zu lösen, so daß z. B. Zeichnungen geschnitten bzw. getrennt werden können ohne das Teile davon zerkleinert werden.

Der Zerkleinerer kann alleine oder zusammen mit dem Messerträger in eine Parkposition an den Enden der Beschneidevorrichtung gefahren werden. Hier sind Schaltnocken vorgesehen, bei deren Überfahren die schwenkbare Klappe des Zerkleinerers geöffnet wird. Die Abfallschnitzel fallen in dieser Position des Zerkleinerers in einen unterhalb der Beschneidemaschine angeordneten Entsorgungsbehälter. Die Klappe ist von einer mittleren Position in beiden Richtungen schwenkbar. In beiden Endpositionen des Zerkleinerers sind Schaltnocken und Entsorgungsbehälter vorgesehen, so daß auf der einen Seite der Beschneidemaschine die Schnitzel eines Materials und auf der anderen Seite der Beschneidemaschine die Schnitzel eines zweiten Materials getrennt voneinander gesammelt werden können, wodurch eine Trennung nach Sorten möglich ist.

Die Walzenmesser sind voll gekapselt. Damit in den Endpositionen keine Gefahr von dem motorisch angetriebenen Messer ausgehen kann wird dieses, bewirkt durch das Überfahren des Schaltnockens, mittels eines Schalters abgeschaltet.

Ein Ausführungsbeispiel der Erfindung wird anhand einer Zeichnung näher erläutert.

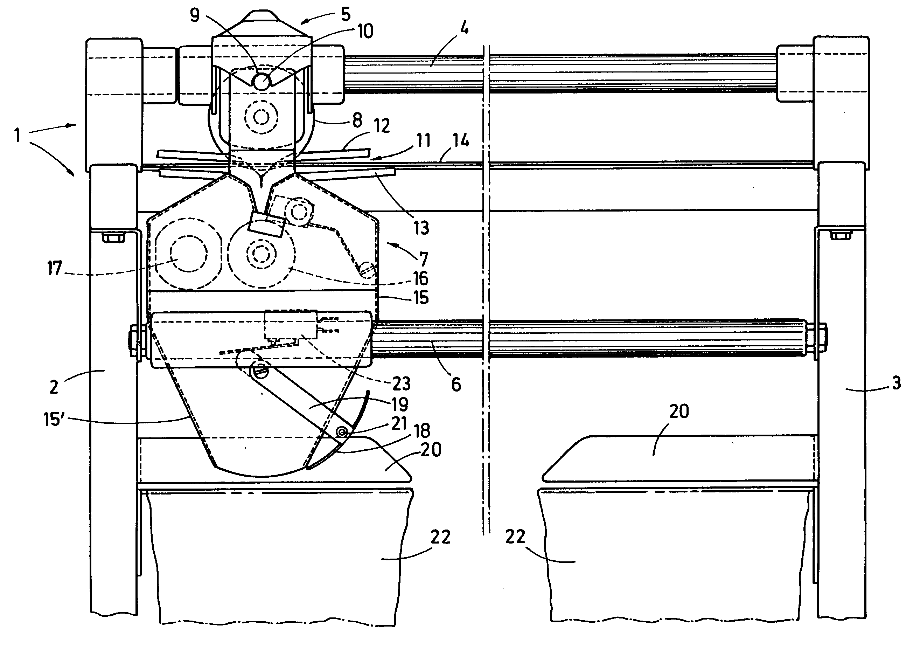

Die Zeichnung zeigt eine Beschneidemaschine 1, die aus Ständerholmen 2 und 3 besteht, zwischen denen eine Linearführung 4 für den Messerträger 5 und eine Linearführung 6 für den Zerkleinerer 7 angeordnet ist. Der Messerträger 5 haltert ein Kreismesser 8 und weist eine Kupplung 9 auf, mittels der über einen Mitnehmer 10 der Zerkleinerer 7 mit dem Messerträger 5 verbindbar ist.

Der Zerkleinerer 7 weist eine symmetrisch aufgebaute Führung 11 auf, die aus einem oberen Leitblech 12 und einem unteren Leitblech 13 besteht. Das untere Leitblech 13 ist so angeordnet, daß es das als Gegenmesser zum Kreismesser 8 dienende feststehende Längsmesser untergreift. Dadurch ist gewährleistet, daß die abgetrennten Abfallstreifen sicher auf dem unteren Leitblech 13 aufliegen und in die Führung 11 gelangen. Über die Führung 11 werden die Abfallstreifen in das Gehäuse 15 des Zerkleinerers 7 geleitet. Im Zerkleinerer 7 ist am Ende der Führung 11 ein Walzenmesser 16, welches über einen Motor 17 drehantreibbar ist, angeordnet. Der untere Teil des Gehäuses 15 ist als Auffang-Behältnis 15' für die zerkleinerten Abfallstreifen ausgebildet. Das Behältnis 15' verjüngt sich an seinem unteren Ende und wird hier durch eine Klappe 18 abgeschlossen. Die Klappe 18 ist an einem Arm eines zweiarmigen schwenkbaren Hebels 19 befestigt. Der Hebel 19 wird durch Federkraft in seiner senkrechten Stellung gehalten.

An den Ständerholmen 2 und 3 sind Schaltnocken 20 vorgesehen. Der Hebel 19 weist eine mit den Schaltnocken 20 zusammenwirkenden Nase 21 auf. Wird der Zerkleinerer 7 gegen die Ständerholme 2, 3 in Endposition verfahren, so läuft die Nase 21 auf den Schaltnocken 20 auf und bewegt den Hebel 19 entgegen der Federkraft aus seiner senkrechten Position in eine abgewinkelte Position. Dadurch wird die Klappe 18 verschwenkt und das Behältnis 15' nach unten geöffnet. Die Abfallschnitzel können in dieser Position in einen unterhalb der Endposition des Zerkleinerers 7 angeordneten Entsorgungsbehälter 22 fallen.

Der zweite Arm des Hebels 19 wirkt auf den Betätigungshebel eines elektrischen Schalters 23, der mit dem Motor 17 in Reihe geschaltet ist. In der senkrechten Position des Hebels 19 ist der Schalter 23 eingeschaltet. In den verschwenkten Positionen des Hebels 19 dagegen ausgeschaltet. Damit ist sichergestellt, daß wenn das Behältnis 15' geöffnet ist, die Walzenmesser 16 nicht drehangetrieben werden.

## Patentansprüche

1. Verfahren zum Erfassen von beim Betreiben von ein verfahrbares Kreismesser (8) aufweisenden Beschneidemaschinen (1) für Papier, Pappe, Folien oder dergleichen anfallenden Abfallstreifen für deren Entsorgung,
**dadurch gekennzeichnet,**
daß die Abfallstreifen im Bereiche der Trennstelle erfaßt und in einen mit dem Kreismesser (8) zusammen verfahrbaren Zerkleinerer (7) überführt werden und die entstehenden Schnitzel in einem entleerbaren Behältnis (15') aufgefangen werden.

2. Verfahren nach Anspruch 1,
**dadurch gekennzeichnet,**
daß die Abfallstreifen in beiden Schneidrichtungen des Kreismessers (8) erfaßbar sind.

3. Vorrichtung zum Erfassen von beim Betreiben von ein entlang eines Längsmessers verfahrbares Kreismesser (8) aufweisenden Beschneidmaschinen (1) für Papier, Pappe, Folien oder dergleichen anfallenden Abfallstreifen für deren Entsorgung,
**dadurch gekennzeichnet,**
daß der das Kreismesser (8) aufnehmende, entlang des Längsmessers (14) verfahrbare Messerträger (5) mit einem, mit dem Messerträger (5) verschiebbaren Zerkleinerer (7) koppelbar ist, und daß zwischen dem Messerträger (5) und dem Zerkleinerer (7) eine Führungsvorrichtung (11, 12, 13) vorgesehen ist, welche abzutrennende Abfallstreifen vor oder an der Trennstelle erfaßt und dem Zerkleinerer (7) zuführt.

4. Vorrichtung nach Anspruch 3,
**dadurch gekennzeichnet,**
daß dem Zerkleinerer (7) ein entleerbares Behältnis (15') zugeordnet ist.

5. Vorrichtung nach Anspruch 4,
**dadurch gekennzeichnet,**
daß das Behältnis (15') nach unten durch eine schwenkbare Klappe (18) verschließbar ist.

6. Vorrichtung nach einem der Ansprüche 3 bis 5,
**dadurch gekennzeichnet,**
daß der Zerkleinerer (7) einen seine Messer (16) antreibenden Motor (17) aufweist.

7. Vorrichtung nach einem der Ansprüche 3 bis 5,
**dadurch gekennzeichnet,**
daß der Zerkleinerer einen durch Bewegungen in seiner Führungsbahn betätigbares Getriebe aufweist, durch welches seine Messer angetrieben werden.

8. Vorrichtung nach einem der Ansprüche 3 bis 5 bzw. 7 mit mittels eines Motors betriebenen Messerträgers,
**dadurch gekennzeichnet,**
daß Messer des Zerkleinerers durch den gleichen Motor betreibbar sind.

9. Vorrichtung nach einem der Ansprüche 3 bis 8,
**dadurch gekennzeichnet,**
daß der Zerkleinerer (7) auf einer zusätzlichen Linearführung (6) verschiebbar ist.

10. Vorrichtung nach einem der Ansprüche 3 bis 9,
**dadurch gekennzeichnet,**
daß der Messerträger (5) und der Zerkleinerer (7) durch eine Schalt- und/oder rastbare Kupplung (9) lösbar miteinander verbunden sind.

11. Vorrichtung nach einem der Ansprüche 3 bis 10
**gekennzeichnet durch**
eine symmetrische, in beiden Arbeitsrichtungen des Messerträgers (5) wirksame Führungsvorrichtung (11, 12, 13) für die Abfallstreifen.

12. Vorrichtung nach einem der Ansprüche 5 bis 11,
**dadurch gekennzeichnet,**
daß in Extremstellungen des Verschiebewegs des Zerkleinerers (7) Schaltnocken (20) angeordnet sind, welche beim Auflaufen eine Betätigung der Klappe (18) bewirken.

13. Vorrichtung nach einem der Ansprüche 5 bis 12,
**dadurch gekennzeichnet,**
daß in Extremstellungen des Verschiebewegs des Zerkleinerers (7) Schaltnocken (20) angeordnet sind, welche einen dem Motor (17) des Zerkleinerers (7) vorgeordneten Ausschalter (23) betätigen.

14. Vorrichtung nach einem der Ansprüche 5 bis 13,
**dadurch gekennzeichnet,**
daß der Zerkleinerer (7) ein durch die Schaltnocken (20) betätigbaren Hebel (19) aufweist, der auf seinem Schwenkweg die Klappe (18) mitnimmt und mittels eines Nocken den Ausschalter (23) betätigt.

## Claims

1. Method of detecting waste strips, which occur during operation of trimming machines (1) which have a traveling circular knife (8) and are for paper, cardboard, foils or the like, for the disposal of such strips, characterised in that the waste strips are detected in the region of the separating location and are transferred into a comminuting device (7) able to travel together with the circular knife (8), and the arising shreds are caught in an emptiable container (15').

2. Method according to claim 1, characterised in that the waste strips are detectable in both cutting directions of the circular knife (8).

3. Device for detecting waste strips, which occur during operation of trimming machines which have a circular knife (8) traveling along a longitudinal knife and are for paper, cardboard, foils or the like, for the disposal of such strips, characterised in that the knife carrier (5) receiving the circular knife (8) and traveling along the longitudinal knife (14) can be coupled with a comminuting device (7) displaceable together with the knife carrier (5), and that a guide device (11, 12, 13) is provided between the knife carrier (5) and the comminuting device (7) and detects waste strips, which are being cut off, in front of or at the separating location and feeds the waste strips to the comminuting device (7).

4. Device according to claim 3, characterised in that an emptiable container (15') is associated with the comminuting device (7).

5. Device according to claim 4, characterised in that the container (15') is closable downwardly by a pivotable flap (18).

6. Device according to one of claims 3 to 5, characterised in that the comminuting device (7) comprises a motor (7) driving its knives (16).

7. Device according to one of claims 3 to 5, characterised in that the comminuting device comprises a transmission which is actuable by movements in its guide path and by which its knives are driven.

8. Device according to one of claims 3 to 5 or 7 with a knife carrier operated by means of a motor, characterised in that knives of the comminuting device are operable by the same motor.

9. Device according to one of claims 3 to 8, characterised in that the comminuting device (7) is displaceable on an additional linear guide (6).

10. Device according to one of claims 3 to 9, characterised in that the knife carrier (5) and the comminuting device (7) are detachably connected together by a switchable and/or detentable coupling (9).

11. Device according to one of claims 3 to 10, characterised by a symmetrical guide device (11, 12, 13), which is effective in both working directions of the knife carrier (5), for the waste strips.

12. Device according to one of claims 5 to 11, characterised in that arranged in extreme settings of the displacement path of the comminuting device (7) are switching cams (20) which, on being run up against, cause an actuation of the flap (18).

13. Device according to one of claims 5 to 12, characterised in that arranged in extreme settings of the displacement path of the comminuting device (7) are switching cams (20) which actuate a cut-off switch (23) arranged in front of the motor (17) of the comminuting device (7).

14. Device according to one of claims 5 to 13, characterised in that the comminuting device (7) comprises a lever (19) which is actuable by the switching cams (20) and which, on its pivot path, entrains the flap (18) and actuates the cut-off switch (23) by means of a cam.

## Revendications

1. Procédé pour saisir des chutes produites lors du fonctionnement de rogneuses (1) pour du papier, de la pâte, des films ou analogues afin de les évacuer, lesdites rogneuses présentant un couteau circulaire (8) pouvant être déplacé, caractérisé en ce que les chutes sont saisies au niveau de l'endroit de coupe et passent dans un broyeur (7) pouvant être déplacé simultanément avec le couteau circulaire (8) et en ce que les rognures produites sont récupérées dans un réservoir (15') pouvant être vidé.

2. Procédé selon la revendication 1, caractérisé en ce que les chutes peuvent être saisies dans les deux sens de coupe du couteau circulaire (8).

3. Dispositif pour saisir des chutes produites lors du fonctionnement de rogneuses (1) pour du papier, de la pâte, des films ou analogues afin de les évacuer, lesdites rogneuses présentant un couteau circulaire (8) pouvant être déplacé le long d'un couteau longitudinal, caractérisé en ce que le porte-couteau (5), destiné à recevoir le couteau circulaire (8) et pouvant être déplacé le long du couteau longitudinal (14), peut être accouplé à un broyeur (7) pouvant être déplacé avec le porte-couteau (5) et en ce qu'on a prévu, entre le porte-couteau (5) et le broyeur (7), un dispositif de guidage (11, 12, 13) qui saisit les chutes à évacuer avant ou au niveau de l'endroit de coupe et qui les achemine vers le broyeur (7).

4. Dispositif selon la revendication 3, caractérisé en ce que le broyeur (7) est équipé d'un réservoir (15') pouvant être vidé.

5. Dispositif selon la revendication 4, caractérisé en ce que le réservoir (15') peut être fermé vers le bas par un clapet (18) pivotant.

6. Dispositif selon une quelconque des revendications 3 à 5, caractérisé en ce que le broyeur (7) présente un moteur (17) entraînant ses couteaux (16).

7. Dispositif selon une quelconque des revendications 3 à 5, caractérisé en ce que le broyeur présente un dispositif d'entraînement qui entraîne ses couteaux, pouvant être actionné par des mouvements dans sa voie de guidage.

8. Dispositif selon une quelconque des revendications 3 à 5 ou 7 présentant un porte-couteau entraîné par un moteur, caractérise en se que des couteaux du broyeur peuvent être entraînés par le même moteur.

9. Dispositif selon une quelconque des revendications 3 à 8, caractérisé en ce que le broyeur (7) peut être déplacé sur un dispositif de guidage linéaire (6) supplémentaire.

10. Dispositif selon une quelconque des revendications 3 à 9, caractérisé en ce que le porte-couteau (5) et le broyeur (7) sont reliés l'un à l'autre de manière amovible par un accouplement (9) à commutation et/ou à verrouillage.

11. Dispositif selon une quelconque des revendications 3 à 10, caractérisé par un dispositif de guidage (11, 12, 13) pour les chutes, symétrique, agissant dans les deux sens de fonctionnement du porte-couteau (5).

12. Dispositif selon une quelconque des revendications 5 à 11, caractérisé en ce qu'on a disposé des cames de commutation (20) dans les positions extrêmes du parcours de déplacement du broyeur (7), qui actionnent le clapet (18) en cas de débordement.

13. Dispositif selon une quelconque des revendications 5 à 12, caractérisé en ce qu'on a disposé des cames de commutation (20) dans les positions extrêmes du parcours de déplacement du broyeur (7), qui agissent sur un interrupteur (23) disposé devant le moteur (17) du broyeur (7).

14. Dispositif selon une quelconque des revendications 5 à 13, caractérisé en ce que le broyeur (7) présente un levier (19) pouvant être actionné par les cames de commutation (20), ledit levier entraînant, sur son parcours de pivotement, le clapet (18) et actionnant, via une came, l'interrupteur (23).
